# EUROPÄISCHE PATENTSCHRIFT

(11) **EP 2 673 342 B1**
(45) Veröffentlichungstag und Bekanntmachung des Hinweises auf die Patenterteilung: **29.03.2017**
(21) Anmeldenummer: 12705082.1
(22) Anmeldetag: 06.02.2012
(51) Int. Cl.: C10G 73/04, C10G 73/22, C08F 220/18, C10G 73/06, C10G 21/16, C10G 29/22, C10G 31/06, C10G 73/12, C10M 101/02

(54) **VERFAHREN ZUR ENTPARAFFINIERUNG VON MINERALÖLZUSAMMENSETZUNGEN**
METHOD FOR DEWAXING MINERAL OIL COMPOSITIONS
PROCÉDÉ DE DÉPARAFFINAGE DE COMPOSITIONS D'HUILES MINÉRALES

(30) Priorität: 09.02.2011 DE 102011003855
(43) Veröffentlichungstag der Anmeldung: 18.12.2013
(73) Patentinhaber: Evonik Oil Additives GmbH, 64293 Darmstadt (DE)
(72) Erfinder: KOSCHABEK, Rene, 69469 Weinheim (DE); STÖHR, Torsten, 60389 Frankfurt (DE); WEBER, Markus, 64395 Brensbach (DE); UNGLERT, Andre, 60486 Frankfurt (DE); TSCHEPAT, Wolfgang, 64291 Darmstadt (DE)
(86) Internationale Anmeldenummer: PCT/EP2012/051911
(87) Internationale Veröffentlichungsnummer: WO 2012/107372

(56) Entgegenhaltungen:
- WO-A1-03/074578
- GB-A- 1 145 427
- JP-A- 2000 336 377
- US-A- 4 728 414

## Beschreibung

Die vorliegende Erfindung betrifft Verfahren zur Entparaffinierung von Mineralölzusammensetzungen.

Zur Herstellung von Schmierölen werden die üblicherweise eingesetzten Rohöle einem aufwendigen Veredelungsprozess unterworfen, um die unterschiedlichen Rohölqualitäten an die Anforderungen der Anwender anzupassen. Vielfach werden die Waschdestillate aus der Vakuumdestillation des Rohöls zunächst durch Lösungsmittelextraktion von Aromaten und Heterocyclen befreit.

Die Raffinate enthalten üblich jedoch große Mengen an Paraffinwachs, so dass die Stockpunkte der Öle entsprechend hoch sind. Deshalb wird der Anteil an Paraffin durch Lösungsmittelentparaffinierung abgesenkt.

Eine allgemeine Beschreibung des Entparaffinierungsprozesses (Dewaxing) kann in (Sequeira, A. Jr., Lubricant Base Oil and Wax Processing, 1994) gefunden werden.

Eine Optimierung des Entparaffinierungsprozesses lässt sich durch Einsatz polymerer Entparaffinierungshilfsmittel, sogenannter Dewaxing Aids (DWA), erzielen. Solche DWA beeinflussen Größe und Form der Paraffinkristalle, so dass kompakte Strukturen entstehen, die einen porösen, für das Lösungsmittel-Öl-Gemisch durchlässigen Filterkuchen bilden. Filtrationsgeschwindigkeit und Ölausbeute lassen sich so beträchtlich erhöhen.

US-P 4,451, 353 beschreibt Mischungen aus einem Poly-C10-C28-alkylacrylat und einem Poly-n-alkylmethacrylat (C10-C20) als Dewaxing Aid. Es wird allerdings auf die ausschließliche Verwendung linearer Polyalkylmethacrylate als Mischkomponente hingewiesen.

In der DE-A-3933376 wurde gezeigt, dass bei Verwendung von Polyalkylmethacrylat-Mischkomponenten mit hohen Verzweigungsgraden der Alkylreste eine bessere Wirksamkeit und ausgeprägtere synergistische Effekte erzielt werden, als mit linearen Systemen.

In Tanasescu et al. (Rev. Chim. (Bucharest) 1998,49 (9), 593-597) ist die Evaluierung von Copolymeren aus C10-18-Methacrylaten und Styrol als Dewaxing Aid in Methylethylketon/Toluol-Gemischen erwähnt.

Weiterhin werden in WO 03/074578 Copolymere als Dewaxing-Additive beschrieben, die von C₁₂ - C₄₀ - Alkyl(meth)acrylaten abgeleitete Wiederholungseinheiten umfassen. Weiterhin weisen die Copolymere üblich einen hohen Anteil an kurzkettigen Alkyl(meth)acrylaten und/oder Styrol auf. Eine spezifische Mischung mit drei oder mehr Copolymeren wird in WO 03/074578 nicht dargelegt.

US4728414 offenbart ein zweckmäßiges Entparaffinierungs-Hilfsmittel Polymer, das von Alkylmethacrylaten mit 16 bis 18 Kohlenstoffatomen aber von keinen Alkylacrylaten mit 19 bis 22 Kohlenstoffatomen abgeleitet ist.

JP 2000 336377 offenbart ein Entparaffinierungs-Hilfsmittel Polymer das von Alkylmethacrylaten und Alkylacrylaten nur mit 16 oder 18 Kohlenstoffatomen abgeleitet ist.

Die bekannten Schmiermittel weisen ein brauchbares Eigenschaftsprofil auf. Allerdings stellt die Bereitstellung eines Verfahrens zur Reduzierung des Paraffinanteils von Mineralölzusammensetzungen mit einem verbesserten Eigenschaftsprofil eine dauerhafte Aufgabe dar.

In Anbetracht des Standes der Technik ist es nun Aufgabe der vorliegenden Erfindung ein Verfahren zur Reduzierung des Paraffinanteils von Mineralölzusammensetzungen mit einem verbesserten Eigenschaftsprofil zur Verfügung zu stellen.

Insbesondere war es mithin Aufgabe der vorliegenden Erfindung ein Verfahren zur Entparaffinierung von Mineralölzusammensetzungen bereitzustellen, welches möglichst kostengünstig und unter Verwendung von bekannten Anlagen durchgeführt werden kann. Weiterhin sollte das Verfahren eine hohe Leistungsfähigkeit in Bezug auf die Abtrennung der Paraffine aufweisen. Insbesondere sollten die Abtrennungsvorrichtungen, beispielsweise die Filter über eine lange Zeit ohne Unterbrechung betrieben werden können. Ferner sollte der Wartungsaufwand der Abtrennungsvorrichtungen, beispielsweise der Filter nach Möglichkeit gering sein.

Weiterhin sollte das Verfahren zur Veredelung vieler unterschiedlicher Mineralölzusammensetzungen eingesetzt werden können, ohne dass die verschiedenen Verfahrensparameter aufwendig angepasst werden müssten. Ferner sollte die Ausbeute an veredeltem Mineralöl möglichst hoch sein.

Darüber hinaus sollte die Durchführung des Verfahrens, insbesondere die Kristallisation des abzutrennenden Paraffins mit einer vergleichsweise hohen Geschwindigkeit erfolgen.

Gelöst werden diese, sowie weitere nicht explizit genannte Aufgaben, die jedoch aus den hierin einleitend diskutierten Zusammenhängen ohne Weiteres ableitbar oder erschließbar sind, durch ein Verfahren zur Reduzierung des Paraffinanteils von Mineralölzusammensetzungen mit allen Merkmalen des Patentanspruchs 1. Zweckmäßige Abwandlungen der erfindungsgemäßen Kraftstoffzusammensetzung werden in den auf Anspruch 1 rückbezogenen abhängigen Ansprüchen unter Schutz gestellt.

Gegenstand der vorliegenden Erfindung ist dementsprechend ein Verfahren zur Reduzierung des Paraffinanteils von Mineralölzusammensetzungen, wobei eine Mineralölzusammensetzung mit einem Entparaffinierungs-Hilfsmittels (Dewaxing Aid) versehen, unter Bildung eines Paraffinniederschlags abgekühlt und der entstandene Paraffinniederschlag zumindest teilweise abgetrennt wird, welches dadurch gekennzeichnet ist, dass als Entparaffinierungs-Hilfsmittel eine Copolymer-Mischung mit mindestens vier Copolymeren eingesetzt wird, wobei sich die Copolymere in der Zusammensetzung der Wiederholungseinheiten unterscheiden.

Hierdurch gelingt es auf nicht vorhersehbare Weise ein Verfahren zur Reduzierung des Paraffinanteils von Mineralölzusammensetzungen mit einem verbesserten Eigenschaftsprofil bereitzustellen.

Insbesondere weist das Verfahren eine hohe Leistungsfähigkeit in Bezug auf die Abtrennung der Paraffine auf. Dementsprechend können relativ große Volumina an behandelter Mineralölzusammensetzung von paraffinhaltigem Niederschlag befreit werden. Darüber hinaus können die Abtrennungsvorrichtungen über eine lange Zeit ohne Unterbrechung betrieben werden. Ferner ist der Wartungsaufwand der Abtrennungsvorrichtungen sehr gering.

Weiterhin kann das Verfahren zur Veredelung vieler unterschiedlicher Mineralölzusammensetzungen eingesetzt werden, ohne dass die verschiedenen Verfahrensparameter aufwendig angepasst werden müssten. Ferner ist die Ausbeute an veredeltem Mineralöl sehr hoch, wobei diese Verbesserung für eine Vielzahl unterschiedlicher Ausgangsstoffe erzielt wird.

Darüber hinaus kann die Durchführung des Verfahrens, insbesondere die Kristallisation des abzutrennenden Paraffins mit einer vergleichsweise hohen Geschwindigkeit erfolgen.

Überraschend kann eine zur Erzielung der zuvor dargelegten Eigenschaften des vorliegenden Verfahrens besonders bevorzugte Copolymer-Mischung auf Basis von Polyalkyl(meth)acrylat sehr kostengünstig hergestellt werden.

Die vorliegende Erfindung beschreibt Verfahren zur Reduzierung des Paraffinanteils von Mineralölzusammensetzungen. Mineralölzusammensetzungen, die im Rahmen der vorliegenden Erfindung veredelt werden können, unterliegen keinen besonderen Beschränkungen. Im Allgemeinen basieren diese Kohlenwasserstoffzusammensetzungen auf Erdöl oder Rohöl, welches durch Destillation und/oder Raffination und gegebenenfalls weitere Reinigungs- und Veredelungsverfahren aufgereinigt werden kann, wobei unter den Begriff Mineralöl insbesondere die höhersiedenden Anteile des Roh- oder Erdöls fallen. Im Allgemeinen liegt der Siedepunkt von Mineralöl höher als 200°C, vorzugsweise höher als 300°C, bei 5000 Pa (300°C bis 600°C bei 1,01325 bar). Die Herstellung durch Schwelen von Schieferöl, Verkoken von Steinkohle, Destillation unter Luftabschluss von Braunkohle sowie Hydrieren von Stein- oder Braunkohle ist ebenfalls möglich. Dementsprechend weisen Mineralölzusammensetzungen, je nach Herkunft unterschiedliche Anteile an aromatischen, cyclischen, verzweigten und linearen Kohlenwasserstoffen auf.

Durch das vorliegende Verfahren kann der Paraffinanteil der eingesetzten Mineralölzusammensetzung reduziert werden. Paraffine im Sinne der vorliegenden Erfindung sind insbesondere Alkane mit der allgemeinen Summenformel CₙH₂ₙ₊₂, die eine hohe Anzahl an Kohlenstoffatomen aufweisen. Die Zahl n kann vorzugsweise mindestens 16, besonders bevorzugt mindestens 25 betragen. Die abzutrennenden Alkane führen üblich zu einer ungünstigen Kaltfließfähigkeit, so dass die Mineralöle bei relativ hohen Temperaturen erstarren. Die Schmelztemperatur der Kohlenwasserstoffe hängt vom Verzweigungsgrad der Alkane ab, so dass lineare Alkane mit einer hohen Anzahl an Kohlenstoffatomen zu einem schlechteren Tieftemperaturverhalten führen als verzweigte. Daher weisen abzutrennende Paraffine vorzugsweise eine Schmelztemperatur von mindestens 25°C, besonders bevorzugt mindestens 10°C auf.

Zur Durchführung des erfindungsgemäßen Verfahrens wird ein Entparaffinierungs-Hilfsmittel, auch Dewaxing-Aid genannt, eingesetzt. Dieses Hilfsmittel stellt im Rahmen der vorliegenden Erfindung eine Copolymer-Mischung mit mindestens vier Copolymeren dar, wobei sich die Copolymere in der Zusammensetzung der Wiederholungseinheiten unterscheiden. Vorzugsweise werden als Dewaxing-Aid Polyalkyl(meth)acrylate eingesetzt.

Polyalkyl(meth)acrylate sind Polymere, die durch die Polymerisation von Alkyl(meth)acrylaten erhalten werden können. Der Ausdruck (Meth)acrylate umfasst Methacrylate und Acrylate sowie Mischungen aus beiden. Diese Monomere sind weithin bekannt.

Polyalkyl(meth)acrylate umfassen vorzugsweise mindestens 40 Gew.-%, besonders bevorzugt mindestens 60 Gew.-%, insbesondere bevorzugt mindestens 80 Gew.-% und ganz besonders mindestens 90 Gew.-% Wiederholungseinheiten, die von Alkyl(meth)acrylaten abgeleitet sind.

Von besonderem Interesse sind unter anderem Copolymere, insbesondere Polyalkyl(meth)acrylate, die vorzugsweise ein gewichtsgemitteltes Molekulargewicht M_{w} im Bereich von 5 000 bis 5 000 000 g/mol, bevorzugt 10 000 bis 2 000 000 g/mol, besonders bevorzugt 50 000 bis 1 000 000 g/mol und ganz besonders bevorzugt 200 000 bis 500 000 g/mol aufweisen.

Das zahlengemittelte Molekulargewicht Mₙ kann vorzugsweise im Bereich von 3 000 bis 5 000 000 g/mol, bevorzugt 5 000 bis 2 000 000 g/mol, besonders bevorzugt 20 000 bis 1 000 000 g/mol und ganz besonders bevorzugt 30 000 bis 500 000 g/mol liegen.

Zweckmäßig sind darüber hinaus Copolymere, insbesondere Polyalkyl(meth)acrylate, deren Polydispersitätsindex M_{w}/Mₙ vorzugsweise im Bereich von 1,0 bis 25,0, insbesondere im Bereich von 1,2 bis 20,0, besonders bevorzugt im Bereich von 1,2 bis 17,0, und ganz besonders bevorzugt im Bereich von 1,5 bis 15,0 liegt. Gemäß einer besonderen Ausführungsform kann der Polydispersitätsindex M_{w}/Mₙ bevorzugt mindestens 2, besonders bevorzugt mindestens 5 betragen. Das zahlengemittelte und das gewichtsgemittelte Molekulargewicht können durch bekannte Verfahren, beispielsweise die Gelpermeations-chromatographie (GPC), vorzugsweise unter Verwendung eines PMMA-Standards, bestimmt werden.

Diese Werte werden vorzugsweise von den verschiedenen Copolymeren der Copolymer-Mischung eingehalten, so dass die Copolymer-Mischung vorzugsweise die für die Copolymere dargelegten Molekulargewichts- und Polydispersitätsindex-Werte aufweist.

Bevorzugte Copolymer-Mischungen umfassen mindestens vier, besonders bevorzugt mindestens 5 Copolymere, wobei diese Copolymere jeweils
a) 0 bis 50 Gew.-%, vorzugsweise 0 bis 25 Gew.-% an Wiederholungseinheiten, die von (Meth)acrylaten der Formel (I) abgeleitet sind 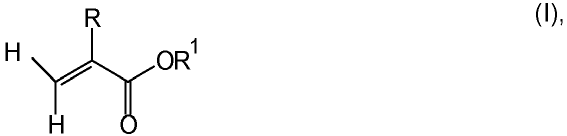 worin R Wasserstoff oder Methyl darstellt und R¹ einen Alkylrest mit 1 bis 11 Kohlenstoffatomen bedeutet,
b) 0 bis 100 Gew.-%, vorzugsweise 0,1 bis 90 Gew.-% an Wiederholungseinheiten, die von (Meth)acrylaten der Formel (II) abgeleitet sind 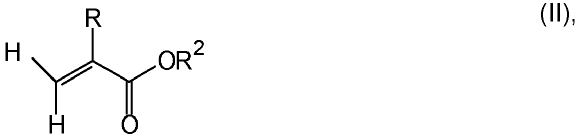 worin R Wasserstoff oder Methyl darstellt und R² einen Alkylrest mit 12 bis 15 Kohlenstoffatomen bedeutet, und
c) 0 bis 100 Gew.-%, vorzugsweise 40 bis 100 Gew.-% und besonders bevorzugt 60 bis 99 Gew.-% an Wiederholungseinheiten, die von (Meth)acrylaten der Formel (III) abgeleitet sind 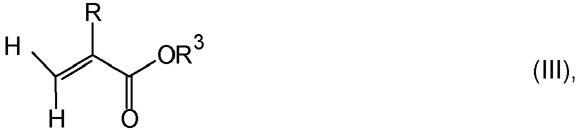 worin R Wasserstoff oder Methyl darstellt und R³ einen Alkylrest mit 16 bis 40 Kohlenstoffatomen bedeutet,
umfassen.

Die Copolymere, vorzugsweise die Polyalkyl(meth)acrylate können bevorzugt durch radikalische Polymerisation erhalten werden. Dementsprechend ergibt sich der Gewichtsanteil an den jeweiligen Wiederholungseinheiten, die diese Polymere aufweisen, aus den zur Herstellung der Polymere eingesetzten Gewichtsanteilen an entsprechenden Monomeren.

Die erfindungsgemäßen Copolymer-Mischungen, umfassend mindestens vier, besonders bevorzugt mindestens 5 Copolymere, werden durch Copolymerisation einer Monomerenmischung bestehend aus mindestens einem Acrylat und mindestens einem Methacrylat in einem Polymerisationsschritt hergestellt.

Beispiele für (Meth)acrylate der Formel (I) sind unter anderem lineare und verzweigte (Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert.-Butyl(meth)acrylat, Pentyl(meth)acrylat, Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat und Undecyl(meth)acrylat; und Cycloalkyl(meth)acrylate, wie Cyclopentyl(meth)acrylat, Cyclohexyl(meth)acrylat, 3-Vinylcyclohexyl(meth)acrylat, Bornyl(meth)acrylat.

Zu den (Meth)acrylaten der Formel (II) gehören insbesondere, lineare und verzweigte (Meth)acrylate, die sich von gesättigten Alkoholen ableiten, wie 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl(meth)acrylat;
(Meth)acrylate, die sich von ungesättigten Alkoholen ableiten, wie z. B. Oleyl(meth)acrylat;
Cycloalkyl(meth)acrylate, wie 2,4 Di-t-butyl-Cyclohexyl(meth)acrylat.

Beispiele für Monomere der Formel (III) sind unter anderem lineare und verzweigte (Meth)acrylate, die sich von gesättigten Alkoholen ableiten, wie Hexadecyl(meth)-acrylat, 2-Methylhexadecyl(meth)acrylat, 2-Methylpentadecyl(meth)acrylat, 2-Ethyltetradecyl(meth)acrylat, 2-Propyltridecyl(meth)acrylat, 2-Butyldodecyl(meth)-acrylat, 2-Methylhexadecyl(meth)acrylat, 2-Pentyldodecyl(meth)acrylat, 2-Hexyldecyl(meth)acrylat, 2-Hexylundecyl(meth)acrylat, n-Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl(meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat;
Cycloalkyl(meth)acrylate, wie 2,4,5-Tri-t-butyl-3-vinylcyclohexyl(meth)acrylat, 2,3,4,5-Tetra-t-butylcyclohexyl(meth)acrylat.

Alkyl(meth)acrylate mit langkettigem Alkoholrest, insbesondere die Komponenten (II) und (III), lassen sich beispielsweise durch Umsetzen von (Meth)acrylaten und/oder den entsprechenden Säuren mit langkettigen Fettalkoholen erhalten, wobei im Allgemeinen eine Mischung von Estern, wie beispielsweise (Meth)acrylaten mit verschieden langkettigen Alkoholresten entsteht. Zu diesen Fettalkoholen gehören unter anderem Oxo Alcohol® 7911, Oxo Alcohol® 7900, Oxo Alcohol® 1100; Alfol® 610, Alfol® 810, Lial® 125 und Nafol®-Typen (Sasol); Alphanol® 79 (ICI); Epal® 610 und Epal® 810 (Afton); Linevol® 79, Linevol® 911 und Neodol® 25E (Shell); Dehydad®, Hydrenol®- und Lorol®-Typen (Cognis); Acropol® 35 und Exxal® 10 (Exxon Chemicals); Kalcol® 2465 (Kao Chemicals).

Falls Alkyl(meth)acrylate gemäß Formel (II) und gemäß Formel (III) eingesetzt werden, kann das Gewichtsverhältnis dieser Monomere in einem weiten Bereich liegen. Vorzugsweise liegt das Verhältnis von Monomeren der Formel (II), die 12 bis 15 Kohlenstoffatome im Alkoholrest aufweisen, zu den Monomeren der Formel (III), die 16 bis 40 Kohlenstoffatome im Alkoholrest aufweisen, im Bereich von 5:1 bis 1:100, besonders bevorzugt im Bereich von 1:1 bis 1:50, insbesondere bevorzugt 1:2 bis 1:10.

Gemäß einer besonderen Ausgestaltung kann die Copolymer-Mischung Copolymere aufweisen, die von Monomeren mit 16 bis 18 Kohlenstoffatomen und von Monomeren mit 19 bis 40 Kohlenstoffatomen abgeleitet sind. Das Gewichtsverhältnis von Alkyl(meth)acrylaten von Monomeren, die 16 bis 18 Kohlenstoffatome im Alkoholrest aufweisen, zu den Monomeren mit 19 bis 40 Kohlenstoffatome im Alkoholrest kann vorzugsweise im Bereich von 100:1 bis 1:100, besonders bevorzugt im Bereich von 50:1 bis 1:50, insbesondere bevorzugt 10:1 bis 1:10 liegen.

Weiterhin kann die Monomermischung zur Herstellung der erfindungsgemäß einzusetzenden Copolymere, insbesondere der Polyalkyl(meth)acrylate Monomere umfassen, die sich mit den (Meth)acrylaten der Formeln (I), (II) und/oder (III) copolymerisieren lassen. Hierzu gehören unter anderem Aryl(meth)acrylate, wie Benzylmethacrylat oder Phenylmethacrylat, wobei die Arylreste jeweils unsubstituiert oder bis zu vierfach substituiert sein können;
Styrol, substituierte Styrole mit einem Alkylsubstituenten in der Seitenkette, wie z. B. α-Methylstyrol und α-Ethylstyrol, substituierte Styrole mit einem Alkylsubstitutenten am Ring, wie Vinyltuluol und p-Methylstyrol, halogenierte Styrole, wie beispielsweise Monochlorstyrole, Dichlorstyrole, Tribromstyrole und Tetrabromstyrole;
Maleinsäure und Maleinsäurederivate, wie beispielsweise Maleinsäuremonoester, Maleinsäurediester, Maleinsäureanhydrid, Methylmaleinsäureanhydrid, Maleinimid, Methylmaleinimid;
Itaconsäure und Itaconsäurederivate, wie beispielsweise Itaconsäuremonoester, Itaconsäurediester und Itaconsäureanhydrid;
Fumarsäure und Fumarsäurederivate wie beispielsweise Fumarsäuremonoester, Fumarsäurediester und Fumarsäureanhydrid.

Gemäß einer besonderen Ausführungsform können insbesondere dispergierende Monomere eingesetzt werden.

Dispergierende Monomere werden seit langem zur Funktionalisierung von polymeren Additiven in Schmierölen eingesetzt und sind dem Fachmann daher bekannt (vgl. R.M. Mortier, S.T. Orszulik (eds.): "Chemistry and Technology of Lubricants", Blackie Academic & Professional, London, 2^{nd} ed. 1997). Zweckmäßig können insbesondere heterocyclische Vinylverbindungen und/oder ethylenisch ungesättigte, polare Ester- oder Amid-Verbindungen der Formel (IV) 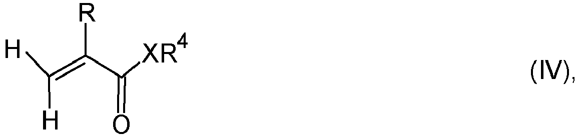 worin R Wasserstoff oder Methyl darstellt, X Sauerstoff, Schwefel oder eine Aminogruppe der Formel -NH- oder -NR^{a}-, worin R^{a} für einen Alkylrest mit 1 bis 10, bevorzugt 1 bis 4 Kohlenstoffatomen steht, R⁴ einen 2 bis 50, insbesondere 2 bis 30, vorzugsweise 2 bis 20 Kohlenstoffatome umfassenden Rest mit mindestens einem, vorzugsweise mindestens zwei Heteroatomen, darstellt, als dispergierende Monomere eingesetzt werden.

Beispiele für dispergierende Monomere der Formel (IV) sind unter anderem Aminoalkyl(meth)acrylate, Aminoalkyl(meth)acrylamide, Hydroxylalkyl(meth)acrylate, heterocyclische (Meth)acrylate und/oder carbonylhaltige (Meth)acrylate.

Zu den Hydroxyalkyl(meth)acrylate zählen unter anderem
2-Hydroxypropyl(meth)acrylat,
3,4-Dihydroxybutyl(meth)acrylat,
2-Hydroxyethyl(meth)acrylat,
3-Hydroxypropyl(meth)acrylat,
2,5-Dimethyl-1,6-hexandiol(meth)acrylat und
1,10-Decandiol(meth)acrylat.

Carbonylhaltige (Meth)acrylate umfassen beispielsweise
2-Carboxyethyl(meth)acrylat,
Carboxymethyl(meth)acrylat,
N-(Methacryloyloxy)formam id,
Acetonyl(meth)acrylat,
Bernsteinsäure-mono-2-(meth)acryloyloxyethylester,
N-(Meth)acryloylmorpholin,
N-(Meth)acryloyl-2-pyrrolidinon,
N-(2-(Meth)acryloyloxyethyl)-2-pyrrolidinon,
N-(3-(Meth)acryloyloxypropyl)-2-pyrrolidinon,
N-(2-(Meth)acryloyloxypentadecyl)-2-pyrrolidinon,
N-(3-(Meth)acryloyloxyheptadecyl)-2-pyrrolidinon und
N-(2-(Meth)acryloyloxyethyl)ethylenharnstoff.
2-Acetoacetoxyethyl(meth)acrylat

Zu den heterocyclischen (Meth)acrylaten zählen unter anderem 2-(1-Imidazolyl)ethyl(meth)acrylat,
Oxazolidinylethyl(meth)acrylat,
2-(4-Morpholinyl)ethyl(meth)acrylat,
1-(2-Methacryloyloxyethyl)-2-pyrrolidon,
N-Methacryloylmorpholin,
N-Methacryloyl-2-pyrrolidinon,
N-(2-Methacryloyloxyethyl)-2-pyrrolidinon,
N-(3-Methacryloyloxypropyl)-2-pyrrolidinon.

Zu den Aminoalkyl(meth)acrylaten zählen insbesondere N,N-Dimethylaminoethyl(meth)acrylat,
N,N-Dimethylaminopropyl(meth)acrylat,
N,N-Diethylaminopentyl(meth)acrylat,
N,N-Dibutylaminohexadecyl(meth)acrylat.

Weiterhin können Aminoalkyl(meth)acrylamide als dispergierende Monomere eingesetzt werden, wie
N,N-Dimethylaminopropyl(meth)acrylamid.

Darüber hinaus können Phosphor-, Bor- und/oder Silicium-haltige (Meth)acrylate als dispergierende Monomere eingesetzt werden, wie 2-(Dimethylphosphato)propyl(meth)acrylat, 2-(Ethylenphosphito)propyl(meth)acrylat,
Dimethylphosphinomethyl(meth)acrylat,
Dimethylphosphonoethyl(meth)acrylat,
Diethyl(meth)acryloylphosphonat,
Dipropyl(meth)acryloylphosphat, 2-(Dibutylphosphono)ethyl(meth)acrylat, 2,3-Butylen(meth)acryloylethylborat,
Methyldiethoxy(meth)acryloylethoxysilan,
Diethylphosphatoethyl(meth)acrylat.

Zu den bevorzugten heterocyclischen Vinylverbindungen zählen unter anderem 2-Vinylpyridin, 3-Vinylpyridin, 4-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, N-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole.

Zu den besonders bevorzugten dispergierenden Monomeren gehören insbesondere ethylenisch ungesättigte Verbindungen, die mindestens ein Stickstoffatom umfassen, wobei diese besonders bevorzugt aus den zuvor dargelegten heterocyclischen Vinylverbindungen und/oder Aminoalkyl(meth)acrylaten, Aminoalkyl(meth)acrylamiden und/oder heterocyclischen (Meth)acrylaten ausgewählt sind.

Der Anteil an Comonomeren kann je nach Einsatzzweck und Eigenschaftsprofil des Polymers variiert werden. Im Allgemeinen kann dieser Anteil im Bereich von 0 bis 30 Gew.-%, vorzugsweise 0,01 bis 20 Gew.-% und besonders bevorzugt 0,1 bis 10 Gew.-% liegen.

Besonders bevorzugt können als Dewaxing-Aid Copolymer-Mischungen eingesetzt werden, die mindestens vier, vorzugsweise mindestens fünf, insbesondere mindestens sechs Copolymere umfassen, die sich in der Zusammensetzung der Wiederholungseinheiten unterscheiden. Besonders bevorzugt werden Copolymer-Mischungen verwendet, deren Copolymere durch eine kontinuierliche Variation der Zusammensetzung der Wiederholungseinheiten gekennzeichnet ist.

Auch bei einer Herstellung von Copolymeren in einem Chargenverfahren kann sich die Zusammensetzung der einzelnen Copolymere über die Dauer des Polymerisationsverfahrens leicht verändern. Diese Copolymere werden bei üblichen Verfahren jedoch als einzelnes Copolymer zu bezeichnen sein, da die Copolymerzusammensetzung in Bezug auf die Wiederholungseinheiten konstant bleibt und die verschiedenen Copolymere im Allgemeinen meist nur eine geringe Variation aufweisen. Zur Klarstellung werden im Rahmen der vorliegenden Erfindung als "einzelnes Copolymer" polymere Verbindungen zusammengefasst, deren Zusammensetzung sich in Bezug auf die Wiederholungseinheiten um maximal 2 Gew.-%, vorzugsweise um maximal 1 Gew.-% unterscheiden, wobei die Wiederholungseinheit mit dem maximalen Unterschied zugrunde zu legen ist, welche einen Gewichtsanteil in mindestens einem der Copolymere von mindestens 2 Gew.-% aufweist. Bei den zuvor dargelegten Wiederholungseinheiten, die von Alkyl(meth)acrylaten abgeleitet sind, werden die Verzweigungen nicht berücksichtigt, so dass Wiederholungseinheiten mit einer identischen Anzahl von Kohlenstoffatomen, die von Alkyl(meth)acrylaten abgeleitet sind, als gleich gelten. Ähnliches gilt für andere Monomere, die von Alkoholen oder Estern abgeleitet sind, wie Maleinsäurederivate.

Vorzugsweise unterscheiden sich mindestens vier, besonders bevorzugt mindestens fünf der Copolymere der Copolymer-Mischung in der Zusammensetzung der Wiederholungseinheiten um jeweils mindestens 3 Gew.-%, vorzugsweise mindestens 5 Gew.-% und besonders bevorzugt mindestens 10 Gew.-%, bezogen auf den Gewichtsanteil der jeweiligen Wiederholungseinheit im Copolymeren mit dem höheren Anteil der entsprechenden Wiederholungseinheit. Der Unterschied zwischen zwei Copolymeren ist durch die Differenz des Gewichtsanteils der Wiederholungseinheit mit dem maximalen Unterschied gegeben, welche einen Gewichtsanteil in mindestens einem der Copolymere von mindestens 2 Gew.-%, bevorzugt mindestens 4 Gew.-%, bezogen auf das Gesamtgewicht des Copolymeren, aufweist. Diese Definition ist für jede Kombination der mindestens vier, vorzugsweise mindestens fünf unterschiedlichen Copolymere gegeben, wobei die Wiederholungseinheiten, die zur Bestimmung der Differenz herangezogen wird, jeweils variieren kann.

Vorzugsweise beträgt der Anteil eines einzelnen Copolymers in der Copolymer-Mischung höchstens 70 Gew.-%, bevorzugt höchstens 50 Gew.-% und besonders bevorzugt höchstens 30 Gew.-%.

Überraschende Vorteile lassen sich insbesondere durch eine Copolymer-Mischung erzielen, die einen breiten Kristallisationsübergang aufweist. Gemäß einem besonderen Aspekt der vorliegenden Erfindung zeigen bevorzugte Copolymer-Mischungen einen Kristallisationsübergang mit einer Halbwertsbreite von mindestens 5°C, bevorzugt mindestens 8 °C und ganz besonders bevorzugt mindestens 10°C. Die Halbwertsbreite bezieht sich dabei auf die Differenz zwischen maximaler Wärmeflusstemperatur und der Temperatur bei Beginn der Kristallisation (Onset-Temperatur). Vorzugsweise kann die Copolymer-Mischung einen Kristallisationsübergang im Bereich von 20 bis 55 °C, besonders bevorzugt im Bereich von 30 bis 50°C aufweisen. Der Kristallisationsübergang kann mittels Dynamische Differenzkalorimetrie (DSC) anhand der zweiten Abkühlkurve mit einer Abkühlrate von 2°C pro Minute bestimmt werden.

Besonders bevorzugt können die Copolymere der Copolymer-Mischung vorzugsweise mindestens 50 Gew.-%, insbesondere mindestens 70 Gew.-% und ganz besonders bevorzugt mindestens 90 Gew.-% an Wiederholungseinheiten aufweisen, die von Alkyl(meth)acrylaten mit 12 bis 40 Kohlenstoffatomen im Alkylrest abgeleitet sind. Der Anteil der Copolymere mit Wiederholungseinheiten, die von Alkyl(meth)acrylaten mit 12 bis 40 Kohlenstoffatomen im Alkylrest abgeleitet sind, in der Copolymer-Mischung kann vorzugsweise mindestens 30 Gew.-%, besonders bevorzugt mindestens 60 Gew.-% und ganz besonders bevorzugt mindestens 90 Gew.-% betragen. Dementsprechend weisen besonders bevorzugte Copolymer-Mischungen mindestens 60 Gew.-% an Copolymeren auf, die mindestens 70 Gew.-% und ganz besonders bevorzugt mindestens 90 Gew.-% an Wiederholungseinheiten aufweisen, die von Alkyl(meth)acrylaten mit 12 bis 40 Kohlenstoffatomen im Alkylrest abgeleitet sind.

Von besonderem Interesse sind insbesondere Dewaxing-Aids, bei denen mindestens zwei, bevorzugt mindestens drei, insbesondere mindestens vier und besonders bevorzugt mindestens fünf der Copolymere mindestens zwei unterschiedliche Wiederholungseinheiten umfassen, die von Alkyl(meth)acrylaten mit 12 bis 40 Kohlenstoffatomen im Alkylrest abgeleitet sind, wobei sich die Copolymere im Zahlenmittel der Kohlenstoffatomzahl im Alkylrest der Alkyl(meth)acrylate unterscheiden und die Differenz des Zahlenmittels mindestens 2, vorzugsweise mindestens 3 Kohlenstoffatome beträgt, ohne dass hierdurch eine Beschränkung erfolgen soll.

Weiterhin sind Copolymer-Mischungen mit mindestens vier, vorzugsweise fünf einzelnen Copolymeren bevorzugt, deren Copolymere jeweils Wiederholungseinheiten aufweisen, die von Alkylacrylaten abgeleitet sind, und Wiederholungseinheiten, die von Alkylmethacrylaten abgeleitet sind. Erfindungsgemäß sind als Wiederholungseinheiten insbesondere von Alkylmethacrylaten mit 16 bis 18 Kohlenstoffatomen abgeleitete Einheiten und von Alkylacrylaten mit 19 bis 22 Kohlenstoffatomen abgeleitete Einheiten. Überraschende Vorteile können insbesondere mit Copolymer-Mischungen erzielt werden, bei denen vorzugsweise mindestens ein einzelnes Copolymer mindestens 20 Gew.-%, besonders bevorzugt mindestens 30 Gew.-%, besonders bevorzugt mindestens 40 Gew.-% an Wiederholungseinheiten aufweist, die von Alkylacrylaten mit 19 bis 22 Kohlenstoffatomen abgeleitet sind. Vorzugsweise weist in den Mischungen ein einzelnes Copolymer mindestens 40 Gew.-%, besonders bevorzugt mindestens 60 Gew.-% an Wiederholungseinheiten auf, die von Alkylmethacrylaten mit 16 bis 18 Kohlenstoffatomen abgeleitet sind.

Gemäß einer weiteren Ausführungsform können die Copolymer-Mischungen Copolymere mit Wiederholungseinheiten, die von Alkylacrylaten mit 16 bis 18 Kohlenstoffatomen abgeleitet sind, und Wiederholungseinheiten, die von Alkylmethacrylaten mit 19 bis 22 Kohlenstoffatomen sind, enthalten sein. Hierbei sind Copolymer-Mischungen bevorzugt, bei denen vorzugsweise mindestens ein einzelnes Copolymer mindestens 20 Gew.-%, besonders bevorzugt mindestens 30 Gew.-%, besonders bevorzugt mindestens 40 Gew.-% an Wiederholungseinheiten aufweist, die von Alkylmethacrylaten mit 19 bis 22 Kohlenstoffatomen abgeleitet sind. Vorzugsweise weist in den Mischungen ein einzelnes Copolymer mindestens 40 Gew.-%, besonders bevorzugt mindestens 60 Gew.-% an Wiederholungseinheiten auf, die von Alkylacrylaten mit 16 bis 18 Kohlenstoffatomen abgeleitet sind.

Gemäß einem besonderen Aspekt der vorliegenden Erfindung kann eine Copolymer-Mischung eingesetzt werden, die mindestens drei Copolymere mit mindestens zwei unterschiedlichen Wiederholungseinheiten umfasst, die von Alkyl(meth)acrylaten mit 12 bis 40 Kohlenstoffatomen im Alkylrest abgeleitet sind, wobei mindestens ein erstes Copolymer einen höheren Anteil an Wiederholungseinheiten aufweist, die von Alkyl(meth)acrylaten mit 19 bis 22 Kohlenstoffatomen im Alkylrest abgeleitet sind, als mindestens zwei der weiteren Copolymere; mindestens ein zweites Copolymer einen höheren Anteil an Wiederholungseinheiten aufweist, die von Alkyl(meth)acrylaten mit 12 bis 18 Kohlenstoffatomen im Alkylrest abgeleitet sind, als mindestens zwei der weiteren Copolymere; und mindestens ein drittes Copolymer Wiederholungseinheiten aufweist, die von Alkyl(meth)acrylaten mit 19 bis 22 Kohlenstoffatomen im Alkylrest abgeleitet sind, und Wiederholungseinheiten aufweist, die von Alkyl(meth)acrylaten mit 12 bis 18 Kohlenstoffatomen im Alkylrest abgeleitet sind, wobei der Anteil des dritten Copolymers an Wiederholungseinheiten, die von Alkyl(meth)acrylaten mit 19 bis 22 Kohlenstoffatomen im Alkylrest abgeleitet sind, geringer ist als der Anteil an diesen Wiederholungseinheiten im ersten Copolymer und der Anteil des dritten Copolymers an Wiederholungseinheiten, die von Alkyl(meth)acrylaten mit 12 bis 18 Kohlenstoffatomen im Alkylrest abgeleitet sind, geringer ist als der Anteil an diesen Wiederholungseinheiten im zweiten Copolymer.

Die zuvor dargelegten Copolymer-Mischungen sind neu und ebenfalls Gegenstand der vorliegenden Erfindung.

Die als Entparaffinierungs-Hilfsmittel eingesetzten Copolymer-Mischungen können durch separate Polymerisation von mindestens vier, vorzugsweise mindestens fünf unterschiedlichen Copolymeren erhalten werden.

So können diese Polymere insbesondere durch radikalische Polymerisation, sowie verwandte Verfahren, wie beispielsweise ATRP (=Atom Transfer Radical Polymerisation) oder RAFT (=Reversible Addition Fragmentation Chain Transfer) erhalten werden.

Die übliche freie radikalische Polymerisation ist u.a. in Ullmanns's Encyclopedia of Industrial Chemistry, Sixth Edition dargelegt. Im Allgemeinen werden hierzu ein Polymerisationsinitiator sowie ein Kettenüberträger eingesetzt. Zu den verwendbaren Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, tert.-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoylperoxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können. Als Kettenüberträger eignen sich insbesondere öllösliche Mercaptane wie beispielsweise n-Dodecylmercaptan oder 2-Mercaptoethanol oder auch Kettenüberträger aus der Klasse der Terpene, wie beispielsweise Terpinolen.

Das ATRP-Verfahren ist an sich bekannt. Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so dass die Atomgruppe auf die wachsende Polymerkette rückübertragen wird, wodurch ein kontrolliertes Polymerisationssystem gebildet wird. Dementsprechend kann der Aufbau des Polymers, das Molekulargewicht und die Molekulargewichtsverteilung gesteuert werden. Diese Reaktionsführung wird beispielsweise von J-S. Wang, et al., J.Am.Chem.Soc., vol.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/40415 und WO 99/10387 Varianten der zuvor erläuterten ATRP.

Des Weiteren können die erfindungsgemäßen Polymere beispielsweise auch über RAFT-Methoden erhalten werden. Dieses Verfahren ist beispielsweise in WO 98/01478 und WO 2004/083169 ausführlich dargestellt, worauf für Zwecke der Offenbarung ausdrücklich Bezug genommen wird. Weiterhin sind die erfindungsgemäßen Polymere durch NMP-Verfahren (nitroxide mediated polymerization) erhältlich, die unter anderem in US 4581429 beschrieben sind. Umfassend, insbesondere mit weiteren Referenzen sind diese Methoden unter anderem in K. Matyjaszewski, T. P. Davis, Handbook of Radical Polymerization, Wiley Interscience, Hoboken 2002 dargestellt, worauf für Zwecke der Offenbarung ausdrücklich Bezug genommen wird.

Besonders bevorzugt werden die Polymere über Verfahren hergestellt, bei denen die Monomerzusammensetzung stufenweise oder kontinuierlich über den Verlauf der Polymerisation verändert wird. Hierdurch können unmittelbar Copolymer-Mischungen erhalten werden, die als Dewaxing-Aid eingesetzt werden können. Derartige Verfahren sind ausführlich in den Druckschriften WO 2009/007155, eingereicht am 09.05.2008 beim Europäischen Patentamt mit der Anmeldenummer PCT/EP2008/055727, und US 6,140,431, eingereicht am 12.02.1998 beim Amerikanischen Patentamt (USPTO) mit der Anmeldenummer 09/023,149 dargelegt, wobei die in diesen Druckschriften beschriebenen Verfahren sowie die darin dargelegten Copolymere usw. zu Zwecken der Offenbarung in diese Anmeldung eingefügt werden.

Erfindungsgemäß werden die dargelegten Copolymermischungen über eine Copolymerisation von Acrylaten und Methacrylaten erhalten da die unterschiedlichen Copolymerisationsparameter eine kontinuierliche Änderung der Copolymerzusammensetzung bewirkt.

Die Polymerisation kann mit oder ohne Lösungsmittel durchgeführt werden. Der Begriff des Lösungsmittels ist hierbei weit zu verstehen. Zu den einzusetzenden Lösungsmitteln gehören Kohlenwasserstofflösungsmittel, wie beispielsweise aromatische Lösungsmittel, wie Toluol, Benzol und Xylol, gesättigte Kohlenwasserstoffe, wie beispielsweise Cyclohexan, Heptan, Octan, Nonan, Decan, Dodecan, die auch verzweigt vorliegen können. Diese Lösungsmittel können einzeln sowie als Mischung verwendet werden. Besonders bevorzugte Lösungsmittel sind Mineralöle, natürliche Öle und synthetische Öle sowie Mischungen hiervon.

Die Polymerisation kann bei Normaldruck, Unter- od. Überdruck durchgeführt werden. Auch die Polymerisationstemperatur ist unkritisch. Im Allgemeinen liegt sie jedoch im Bereich von -20° - 200°C, vorzugsweise 0° - 130°C und besonders bevorzugt 60° - 120°C.

Bevorzugte Verfahren zur Reduzierung des Paraffinanteils von Mineralölzusammensetzungen zeichnen sich dadurch aus, dass dasselbe in Gegenwart eines Lösungsmittels durchgeführt wird. Zu den bevorzugt zur Entparaffinierung eingesetzten Lösungsmittel gehören unter anderem aliphatische Kohlenwasserstoffe mit einem geringen Siedepunkt, der vorzugsweise höchstens 150 °C bei Normaldruck beträgt, darunter die selbstkühlenden Gase wie Propan, Propylene, Butan, Pentan, ferner Isooctan. Eine weitere Gruppe von bevorzugt zur Reduzierung des Paraffinanteils eingesetzten Lösungsmitteln stellen aromatische Kohlenwasserstoffe wie z. B. Toluol, Xylol, Carbonylverbindungen, insbesondere Ketone wie z. B. Aceton, Dimethylketon, Methylethylketon, Methylpropylketon, Methylisobutylketon, und halogenierte Kohlenwasserstoffe wie Methylenchlorid, Dichlorethan oder N-Alkylpyrrolidone wie N-Methylpyrrolidon, N-Ethylpyrrolidon dar.

Besondere Vorteile können insbesondere durch Verwendung von Carbonylverbindungen und/oder aromatischen Kohlenwasserstoffen erzielt werden.

Vorteilhaft sind auch Gemische von Lösungsmitteln, beispielsweise von Ketonen und aromatischen Kohlenwasserstoffen wie Methylethylketon/Toluol oder Methylisobutylketon/Toluol.

Das Lösungsmittel kann mit Vorteil in Mengen von 5 bis 95 Gew.-%, vorzugsweise 20 bis 90 Gew.-%, besonders bevorzugt 50 bis 85 Gew.-%, bezogen auf die abzukühlende, mit Lösungsmittel versetzte Mineralölzusammensetzung eingesetzt werden.

Das Verfahren zur Reduzierung des Paraffinanteils von Mineralölzusammensetzungen umfasst weiterhin die aus dem Stand der Technik bekannten Schritte. So wird zunächst die zu veredelnde Mineralölzusammensetzung mit einem Entparaffinierungs-Hilfsmittels (Dewaxing Aid) versehen, unter Bildung eines Paraffinniederschlags abgekühlt und der entstandene Paraffinniederschlag zumindest teilweise abgetrennt.

Das Mischen von zu veredelnder Mineralölzusammensetzung mit einem Entparaffinierungs-Hilfsmittel kann bei jeder üblichen Temperatur erfolgen, wobei diese Temperaturen vorzugsweise im Bereich von -100 bis 150 °C, insbesondere im Bereich von -50 bis 90 °C und besonders bevorzugt im Bereich von -40 bis 80 °C liegen. Hierbei ist die eingesetzte Temperatur von der Art des Lösungsmittels abhängig, wobei die tiefen Temperaturen insbesondere für Entparaffinierung mit Propan, Propen, Butan, Buten oder anderen Verbindungen mit einer geringen Siedetemperatur als Lösungsmittel gelten. Diese niedrigsiedenden Lösungsmittel werden vielfach durch Druck flüssig gehalten. Überraschende Vorteile lassen sich unter anderem dadurch erzielen, dass die mit einem Entparaffinierungs-Hilfsmittel versetzte Mineralölzusammensetzung auf eine Temperatur oberhalb des Cloud-Points gemäß EN 23015 erhitzt wird.

Nach dem Mischen des Entparaffinierungs-Hilfsmittels mit der Mineralölzusammensetzung wird die erhaltene Mischung unter Bildung eines Paraffinniederschlags abgekühlt. Die Abkühlgeschwindigkeit und die Endtemperatur unterliegen keinen besonderen Bedingungen, wobei eine schnelle Abkühlung und eine hohe Endtemperatur aus wirtschaftlichen Gründen sinnvoll sein können, jedoch die Abtrennbarkeit des erhaltenen Paraffinniederschlags und die Qualität des veredelten Mineralöls negativ beeinflussen können. Andererseits führen eine langsame Abkühlung und eine geringe Endtemperatur zu einem guten Abtrennungsverhalten des erzeugten Paraffinniederschlags.

Überraschende Vorteile lassen sich insbesondere mit Abkühlungsgeschwindigkeiten im Bereich von 0,1 bis 100, besonders bevorzugt im Bereich von 2 bis 40 °C pro Minute erzielen. Bevorzugt liegt die Endtemperatur im Bereich von -60 bis 10 °C, besonders bevorzugt im Bereich von -40 bis -10 °C.

Das Abtrennen des Paraffinniederschlags aus der Zusammensetzung kann mit jedem bekannten Abtrennungsverfahren zum Trennen von Fest-Flüssig-Gemischen erfolgen, wie zum Beispiel Sedimentation, Dekantation, Zentrifugation und Filtration.

Überraschende Vorteile lassen sich insbesondere durch Filtration erzielen, wobei bevorzugt Trommelfilter eingesetzt werden können.

Das erfindungsgemäße Verfahren ist besonders leistungsfähig, wobei die Ausbeute an veredeltem Mineralöl ausgezeichnet ist. Weiterhin werden sehr hohe Filtrationsvolumina innerhalb kurzer Zeit erreicht, wobei die Filter über einen langen Zeitraum kontinuierlich betrieben werden können, falls der Filterkuchen automatisch vom Filter entfernt wird.

Nachfolgend soll die vorliegende Erfindung anhand von Beispielen und Vergleichsbeispielen erläutert werden, ohne dass hierdurch eine Beschränkung erfolgen soll.

### Beispiele und Vergleichsbeispiele

### Allgemeine Herstellvorschrift der Polymere

In einen 2L-Reaktionskolben einer Apparatur mit Säbelrührer, Kühler, Temperaturregler mit PT100, Spritzenpumpe und N₂-Zuleitung wurden 850,0 g Monomere, 143,6 g 100N Öl und 1,0 g Dodecylmercaptan eingewogen. Die Apparatur wurde inertisiert und auf 110°C aufgeheizt. Weitere 6,4 g 100N Öl wurden mit 2,1 g tert.-Butylper-2-ethylhexanoat versetzt. Nachdem das Gemisch im Reaktionskolben eine Temperatur von 110°C erreicht hatte, wurde der Zulauf des Öl/Initiatorgemisches mittels Pumpe gestartet.

Die Zugabe erfolgte über 3 h bei 110°C. Dabei wurden in der ersten Stunde 5% der Lösung zudosiert, in der zweiten 25% und in der letzten Stunde 70% des Gemisches. 2 h nach Zulaufende wurden nochmals 1,7g tert.-Butylper-2-ethylhexanoat zugegeben und 1 h bei 110°C gerührt. Man erhielt eine 85,0%ige klare Lösung bzw. farblosen wachsartigen Feststoff (Beispiele 1 und 2 sowie Vergleichsbeispiele 1 und 2).

Gemäß dem zuvor beschriebenen Verfahren wurden die in Tabelle 1 dargelegten Monomermischungen polymerisiert. Bei Verwendung von Acrylaten und Methacrylaten wurden Copolymer-Mischungen erhalten, deren einzelne Copolymere sich durch eine kontinuierlich veränderliche Zusammensetzung hinsichtlich der Wiederholungseinheiten auszeichnen.

**Tabelle 1**

| | BehA [Gew.-%] | SMA [Gew.-%] | DPMA [w Gew.-%] | Styrol [Gew.-%] |
|---|---|---|---|---|
| Beispiel 1 | 68,0 | 32,0 | - | - |
| Beispiel 2 | 60,0 | 40,0 | - | - |
| Vergleichsbeispiel 1 | 90,0 | - | - | 10,0 |
| Vergleichsbeispiel 2 | 100,0 | - | - | - |
| Vergleichsbeispiel 3 | - | 30,0 | 70,0 | - |
| Vergleichsbeispiel 4 | - | 90,0 | - | 10,0 |
| Vergleichsbeispiel 5 | - | 100,0 | - | - |

| | | | | |
|---|---|---|---|---|
| BehA: Behenylacrylat (Acrylat mit 18 bis 22 C-Atomen im Alkylrest, durchschnittlich 20 C-Atome) SMA: Stearylmethacrylat (Methacrylat mit 16 bis 18 C-Atomen im Alkylrest, durchschnittlich 17,3 C-Atome) DPMA: Dodecyl-pentadecylmethacrylat (Alkohol: Neodol 25) | | | | |

Aus den erhaltenen Polymeren wurden weiterhin die in Tabelle 2 dargelegten Mischungen angefertigt. Die Prozentangaben beziehen sich auf die enthaltenden Polymere.

**Tabelle 2**

| | Zur Herstellung der Mischung eingesetzte Polymere | | |
|---|---|---|---|
| Vergleichsbeispiel 6 | 55 Gew.-% Vergleichsbeispiel 2 | 45 Gew.-% Vergleichsbeispiel 3 | |
| Vergleichsbeispiel 7 | 60 Gew.-% Vergleichsbeispiel 3 | 20 Gew.-% Vergleichsbeispiel 1 | 20 Gew.-% Vergleichsbeispiel 4 |
| Vergleichsbeispiel 8 | 60 Gew.-% Vergleichsbeispiel 2 | 40 Gew.-% Vergleichsbeispiel 5 | |

Zur Unterscheidung der Leistungsfähigkeit der hergestellten Entparaffinierungs-Hilfsmittel wurde ein Laborfiltrationstest verwendet, der die Messung von Ölausbeute und Filtrationsgeschwindigkeit erlaubt. Insbesondere bei letzterer konnten große Unterschiede unter den Beispielen herausgearbeitet werden.

### Durchführung des Filtrationstests

Die Filtrationsapparatur bestand aus einem Stahlfilter mit Deckel und Kühlmantel und wurde mit Hilfe eines Kryostaten im Umlauf gekühlt. Es wurde ein übliches Filtertuch aus einer Entparaffinierungsanlage einer Raffinerie verwendet. Das Filtervolumen betrug 100 ml. Der Filter war über einen Glasaufsatz mit 2- Wegehahn mit einem Messzylinder verbunden. Mittels einer Öl- Drehschieberpumpe, einem Druckminderventil und einem Manometer konnte ein definiertes Vakuum an die Filtrationsapparatur angelegt werden. Das zu entparaffinierende Mineralöldestillat wurde in der Wärme typischerweise bei 70°C, aber in jedem Falle oberhalb des Cloud Points, mit den Entparaffinierungs-Lösungsmitteln sowie den Dewaxing-Aids versetzt und gerührt bis eine klare Lösung resultierte. Dann wurde mit Temperatursteuerung mit definierter Geschwindigkeit auf die gewünschte Filtrationstemperatur abgekühlt. Der Filter wurde auf diese Temperatur vorgekühlt. Sämtliche Filtrationsbedingungen wie Lösungsmittel, Feedsstock-Verhältnis, Verhältnis der Lösemittel im Falle der Verwendung von Lösungsmittelgemischen, Abkühlraten und Filtrationstemperaturen entsprachen denen in der jeweiligen Raffinerie angewandten Bedingungen.

Nach Erreichen der Filtrationstemperatur wurde das Gemisch in den vorgekühlten Filter überführt und das Vakuum wurde angelegt. Es wurde typischerweise bei einem Unterdruck von 300 bis 700 mbar gearbeitet. Das Filtrationsvolumen wurde dann in Abhängigkeit von der Zeit bestimmt. Die Filtration wurde beendet, als keine Flüssigkeit mehr durch das Filtertuch drang.

Es wurde bei allen Filtrationsversuchen eine Additivierungsrate von 350ppm bzgl. Polymere angewandt.

### Anwendungsbeispiel 1

Zur Bestimmung der Leistungsfähigkeit der einzelnen Entparaffinierungs-Hilfsmittel wurde ein 650N Feedstock einer osteuropäischen Raffinerie eingesetzt, wobei die Filtrationsvolumina in ml nach in Tabelle 3 dargelegten Zeiten bestimmt wurden.
Lösemittelsystem : 45% Methylethylketon / 55% Toluol
Feedstock : Lösemittel-Verhältnis = 1 : 4,65
Durchführung : 1) Mischen bei 70 °C, 2) 30 min im Bad bei 25 °C, 3) 60 min im Bad bei -25 °C Filtrationstemperatur : -25 °C

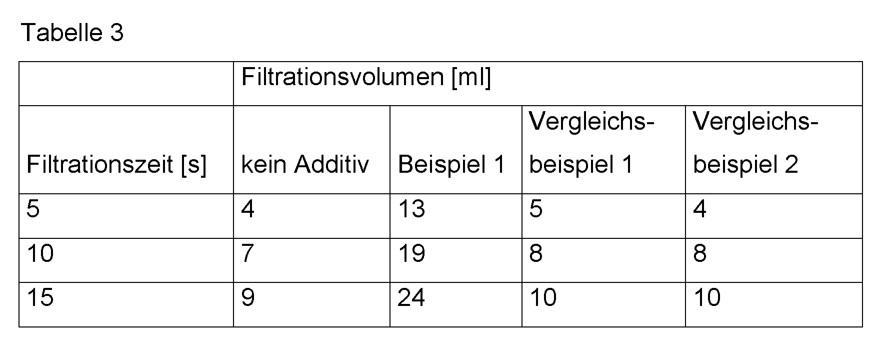

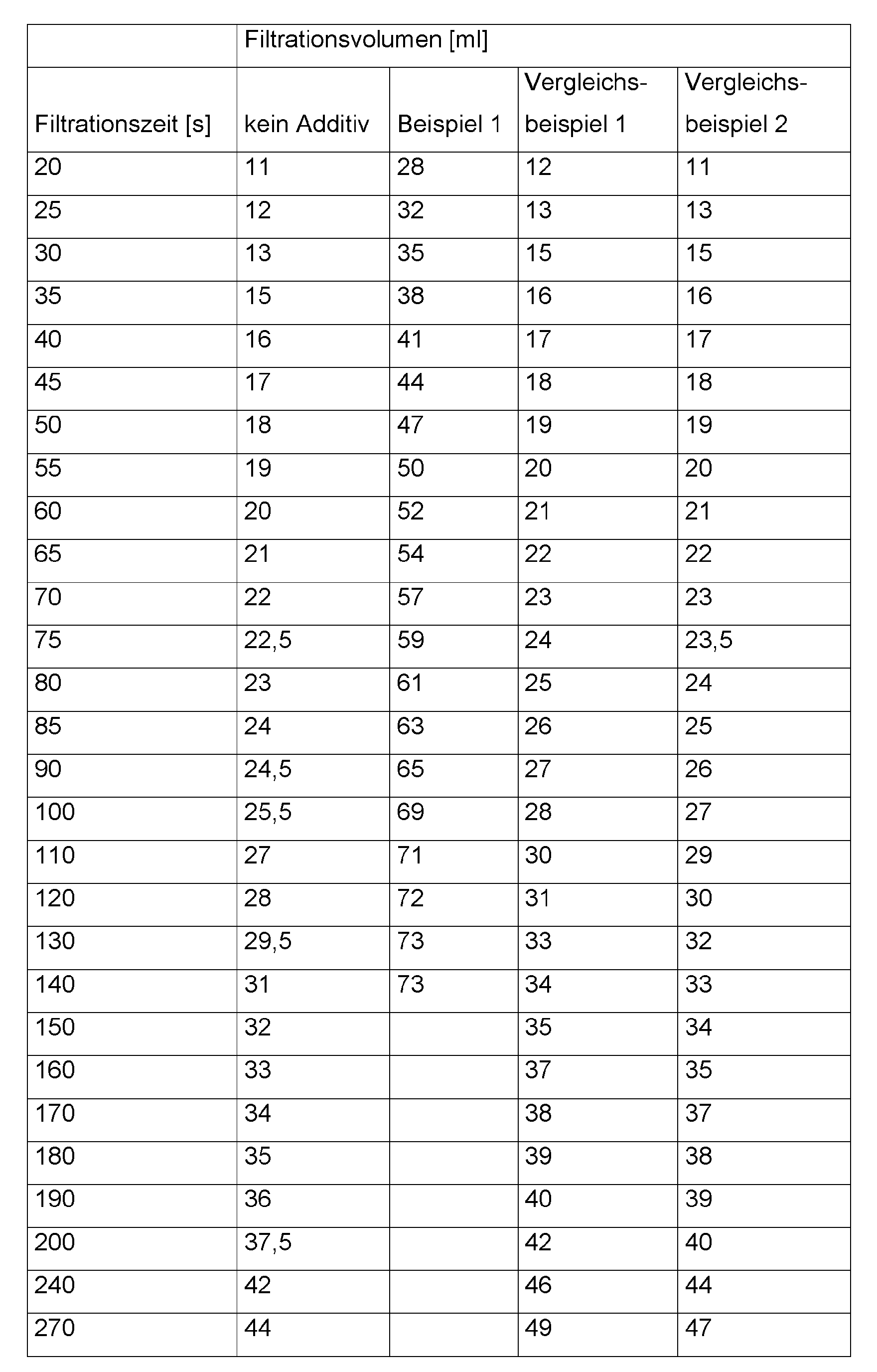

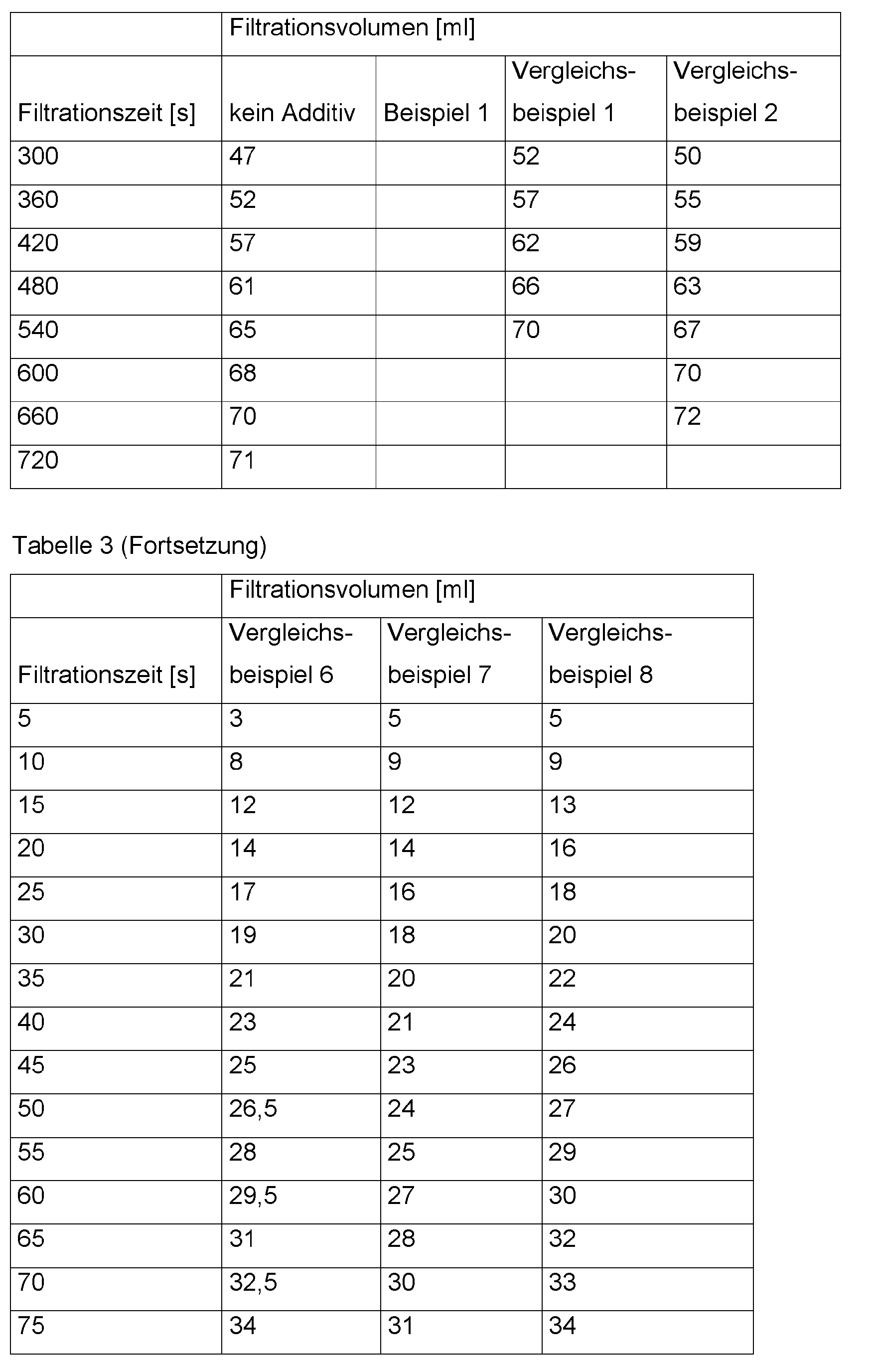

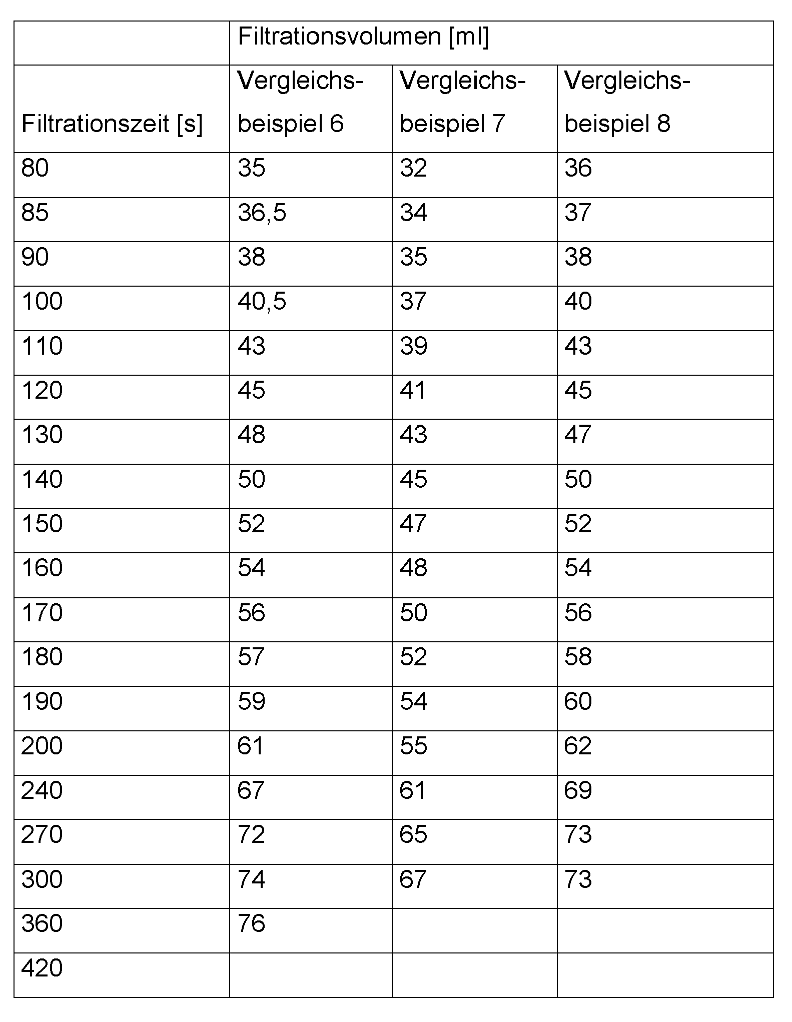

### Anwendungsbeispiel 2

Zur Bestimmung der Leistungsfähigkeit der einzelnen Entparaffinierungs-Hilfsmittel wurde ein 500SN Feedstock einer südwesteuropäischen Raffinerie eingesetzt, wobei die Filtrationsvolumina in ml nach in Tabelle 4 dargelegten Zeiten bestimmt wurden.
Lösemittelsystem : 50% Methylethylketon / 50% Toluol
Feedstock : Lösemittel-Verhältnis = 1 : 2,91
Durchführung : 1) Mischen bei 60 °C, 2) 15 min im Bad bei 20 °C, 3) 60 min im Bad bei -22 °C Filtrationstemperatur : -22 C

**Tabelle 4**

| | Filtrationsvolumen [ml] | | | | |
|---|---|---|---|---|---|
| Filtrationszeit [s] | kein Additiv | Beispiel 1 | Vergleichs beispiel 1 | Vergleichsbeispiel 3 | Vergleichsbeispiel 4 |
| 5 | 4 | 13 | 13 | 6 | 5 |
| 10 | 8 | 23 | 21 | 11 | 8 |
| 15 | 11 | 28 | 28 | 15 | 12 |
| 20 | 13 | 34 | 35 | 18 | 14 |
| 25 | 15 | 39 | 39 | 20 | 15 |
| 30 | 17 | 43 | 43 | 23 | 17 |
| 35 | 19 | 47 | 47 | 25 | 18 |
| 40 | 20 | 51 | 50 | 27 | 21 |
| 45 | 22 | 54 | 53 | 29 | 22 |
| 50 | 23 | 58 | 57 | 31 | 23 |
| 55 | 25 | 61 | 60 | 33 | 25 |
| 60 | 26,5 | 64 | 63 | 34 | 26 |
| 65 | 28 | 67 | 66 | 36 | 27 |
| 70 | 29 | 71 | 68 | 37 | 28 |
| 75 | 31 | 72 | 70 | 38 | 30 |
| 80 | 32 | 72 | 71 | 40 | 31 |
| 85 | 33 | 73 | 72 | 42 | 32 |
| 90 | 34 | 73 | 73 | 43 | 33 |
| 100 | 36 | 74 | 74 | 45 | 35 |
| 110 | 39 | 74 | | 48 | 37 |
| 120 | 41 | | | 50 | 39 |
| 130 | 42,5 | | | 53 | 41 |
| 140 | 45 | | | 55 | 42 |
| 150 | 47 | | | 58 | 44 |
| 160 | 49 | | | 60 | 46 |
| 170 | 51 | | | 62 | 47 |
| 180 | 52 | | | 64 | 49 |
| 190 | 54 | | | 66 | 51 |
| 200 | 56 | | | 68 | 52 |
| 240 | 62 | | | 74 | 58 |
| 270 | 65 | | | 75 | 62 |
| 300 | 67 | | | | 66 |
| 360 | | | | | 71 |

### Anwendungsbeispiel 3

Zur Bestimmung der Leistungsfähigkeit der einzelnen Entparaffinierungs-Hilfsmittel wurde ein Brightstock einer südeuropäischen Raffinerie eingesetzt, wobei die Filtrationsvolumina in ml nach in Tabelle 5 dargelegten Zeiten bestimmt wurden.
Lösemittelsystem : 50% Methylethylketon / 50% Toluol
Feedstock : Lösemittel-Verhältnis = 1 : 3,80
Durchführung : 1) Mischen bei 52 °C, 2) 30 min im Bad bei 5 °C, 3) 60 min im Bad bei -18 °C Filtrationstemperatur : -18 °C

**Tabelle 5**

| | Filtrationsvolumen [ml] | | | | | |
|---|---|---|---|---|---|---|
| Filtrationszeit [s] | kein Additiv | Beispiel 1 | Beispiel 2 | Vgl.-Bsp. 1 | Vgl.-Bsp. 3 | Vgl.-Bsp. 4 |
| 5 | 6 | 11 | 14 | 8 | 9 | 5 |
| 10 | 9 | 24 | 26 | 14 | 14 | 8 |
| 15 | 12 | 35 | 36 | 18 | 19 | 11 |
| 20 | 15 | 43 | 44 | 24 | 23 | 13 |
| 25 | 17 | 51 | 52 | 26 | 26 | 15 |
| 30 | 19 | 59 | 58 | 29 | 30 | 17 |
| 35 | 21 | 65 | 65 | 31 | 33 | 19 |
| 40 | 22 | 71 | 72 | 33 | 36 | 20 |
| 45 | 24 | 76 | 77 | 35 | 39 | 21,5 |
| 50 | 26 | 79 | 80 | 37 | 41 | 23 |
| 55 | 27 | 80 | 81 | 39 | 43 | 24,5 |
| 60 | 28 | 80 | 81 | 41 | 45 | 26 |
| 65 | 30 | | | 42 | 48 | 27 |
| 70 | 31 | | | 44 | 50 | 28 |
| 75 | 32 | | | 45 | 52 | 29 |
| 80 | 34 | | | 47 | 54 | 30 |
| 85 | 36 | | | 49 | 56 | 31 |
| 90 | 37 | | | 51 | 58 | 32 |
| 100 | 39 | | | 53 | 61 | 34 |
| 110 | 41 | | | 56 | 64 | 36 |
| 120 | 43 | | | 59 | 67 | 38 |
| 130 | 46 | | | 61 | 71 | 40 |
| 140 | 48 | | | 63 | 74 | 42 |
| 150 | 50 | | | 66 | 76 | 43 |
| 160 | 52 | | | 68 | 79 | 45 |
| 170 | 54 | | | 71 | 80 | 47 |
| 180 | 56 | | | 72 | 81 | 49 |
| 190 | 57 | | | 74 | 81 | 50 |
| 200 | 59 | | | 79 | 82 | 52 |
| 240 | 66 | | | 80 | | 57 |
| 270 | 70 | | | | | 61 |
| 300 | 72 | | | | | 65 |
| 360 | 75 | | | | | 70 |
| 420 | 76 | | | | | 71 |

### Anwendungsbeispiel 4

Zur Bestimmung der Leistungsfähigkeit der einzelnen Entparaffinierungs-Hilfsmittel wurde ein 500SN Raffinat einer südeuropäischen Raffinerie eingesetzt, wobei die Filtrationsvolumina in ml nach in Tabelle 5 dargelegten Zeiten bestimmt wurden.
Lösemittelsystem : 45% Methylethylketon / 55% Toluol
Feedstock : Lösemittel-Verhältnis = 1 : 2,3
Durchführung : 1) Mischen bei 25 °C, 2) 30 min im Bad bei 5 °C, 3) 60 min im Bad bei -19 °C Filtrationstemperatur : -18 °C

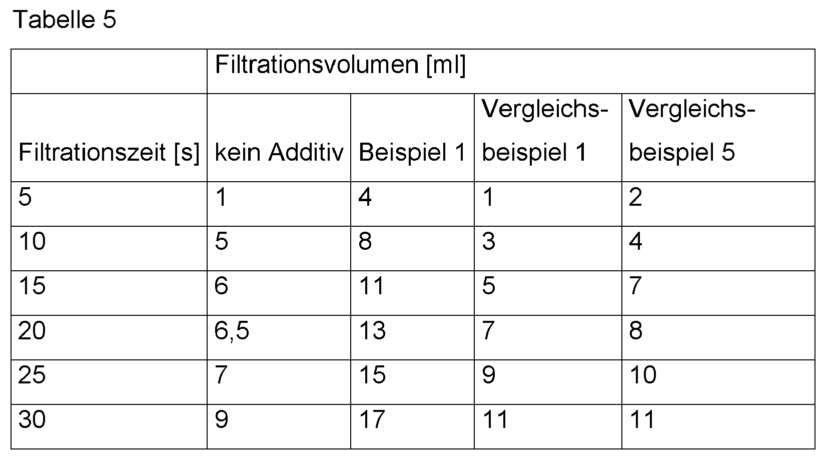

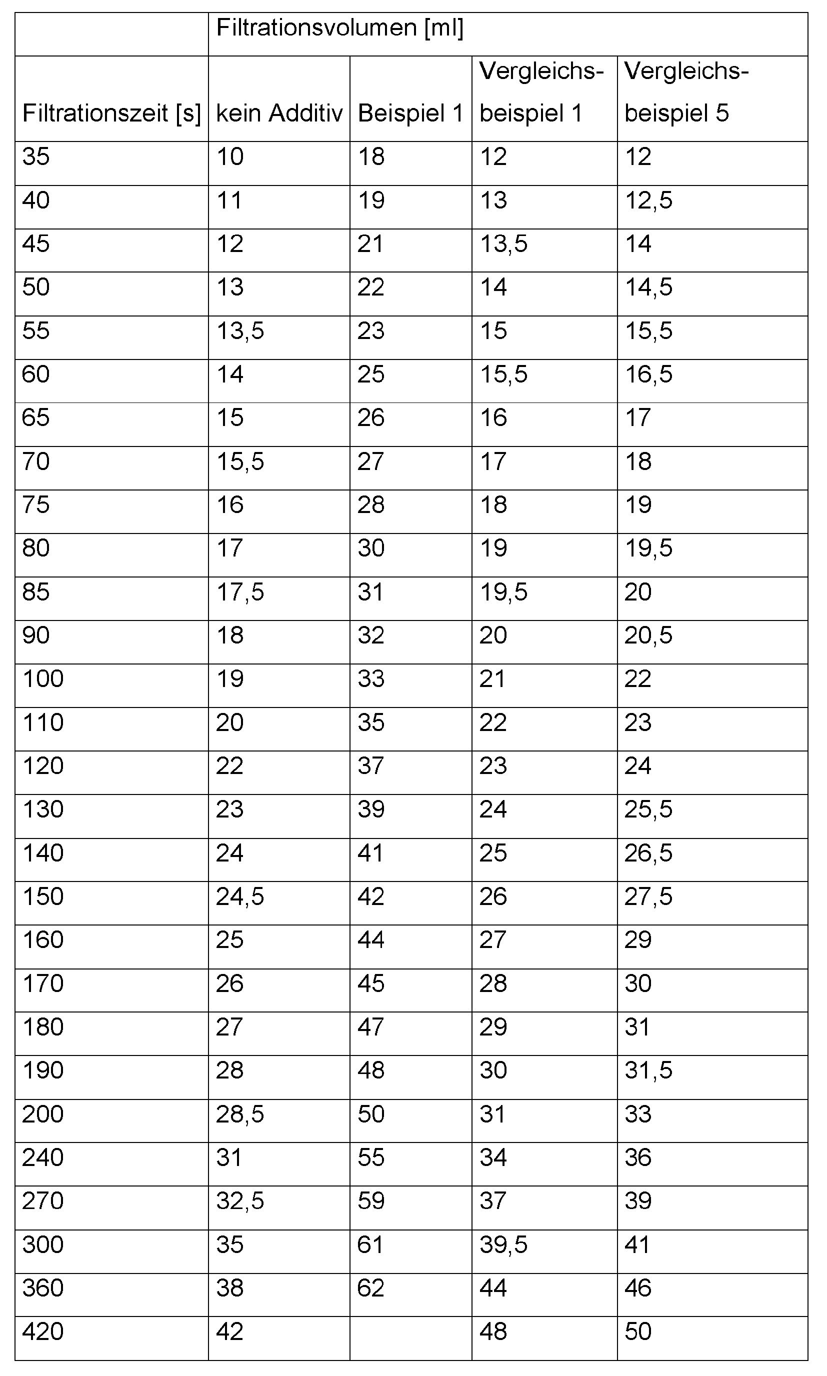

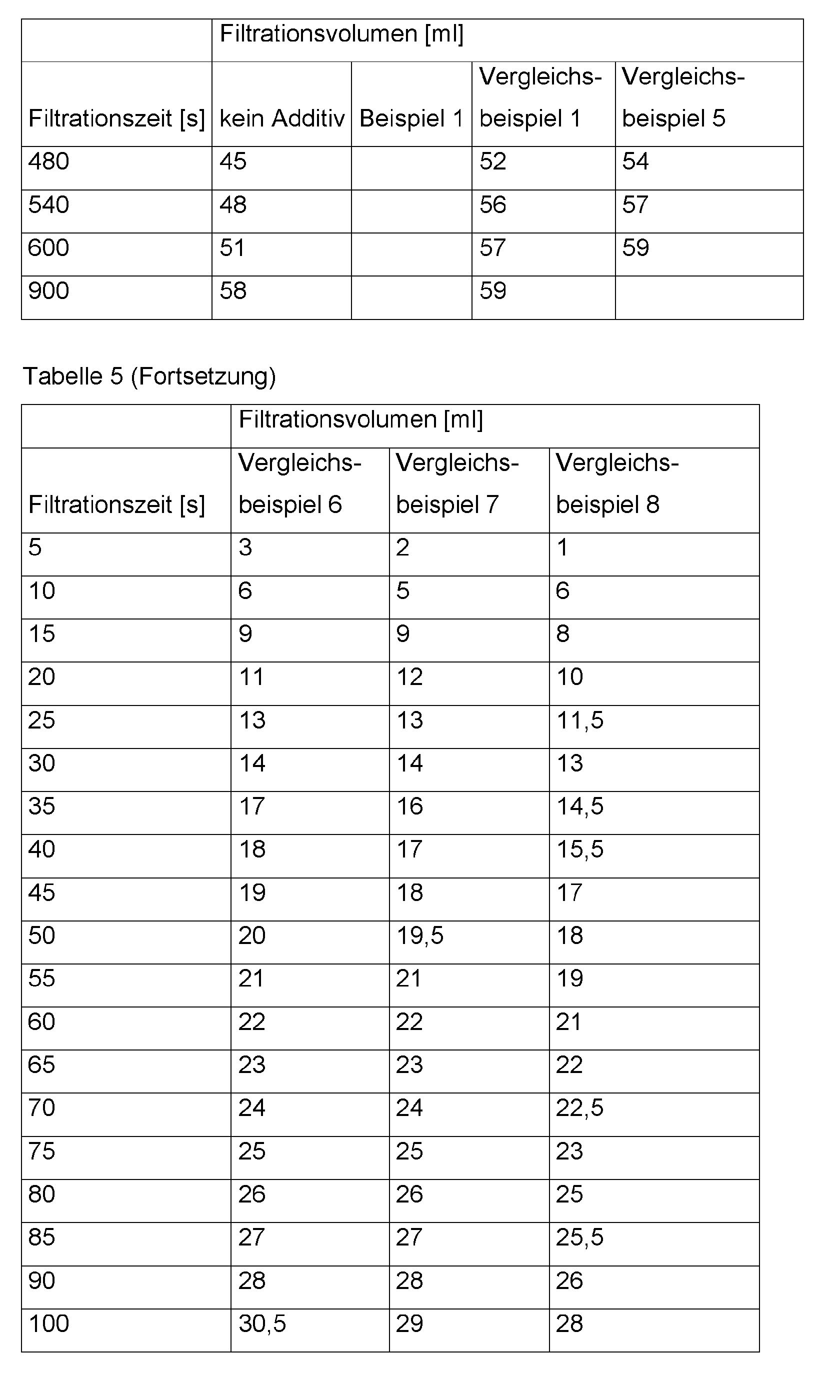

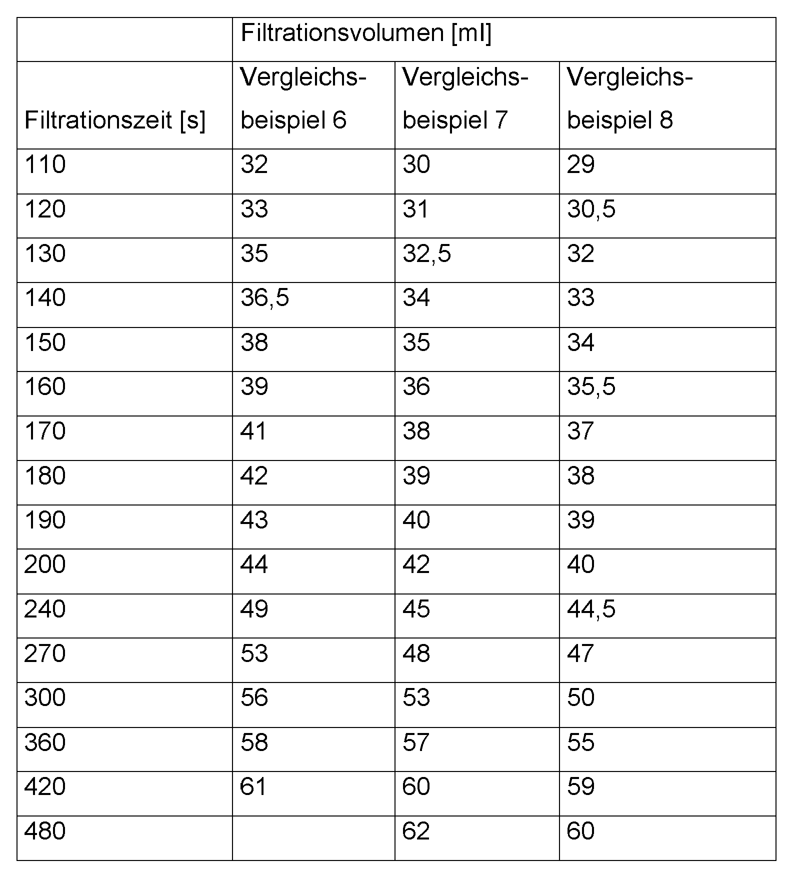

Bei den Filtrationsversuchen ist ersichtlich, dass die Filtrationen unter Verwendung der erfindungsgemäßen Beispiele 1 und 2 signifikant schneller beendet waren als unter Verwendung der Vergleichsbeispiele. Überraschend konnte auch das Volumen des abfiltrierten Öles erhöht werden. Weiterhin zeigen die Anwendungsbeispiele, dass die erfindungsgemäßen Dewaxing-Aids in einer Vielzahl unterschiedlicher Ausgangszusammensetzungen mit großem Erfolg hinsichtlich der Filtrierzeit und der erhaltenen Ausbeute an veredeltem Mineralöl eingesetzt werden können.

## Patentansprüche

1. Verfahren zur Reduzierung des Paraffinanteils von Mineralölzusammensetzungen, wobei eine Mineralölzusammensetzung mit einem Entparaffinierungs-Hilfsmittels (Dewaxing Aid) versehen, unter Bildung eines Paraffinniederschlags abgekühlt und der entstandene Paraffinniederschlag zumindest teilweise abgetrennt wird, **dadurch gekennzeichnet, dass** als Entparaffinierungs-Hilfsmittel eine Copolymer-Mischung mit mindestens vier Copolymeren eingesetzt wird, wobei sich die Copolymere in der Zusammensetzung der Wiederholungseinheiten unterscheiden, wobei die Copolymere Wiederholungseinheiten, die von Alkylmethacrylaten mit 16 bis 18 Kohlenstoffatomen abgeleitet sind, und Wiederholungseinheiten, die von Alkylacrylaten mit 19 bis 22 Kohlenstoffatomen abgeleitet sind, enthalten, und wobei die Copolymer-Mischung durch Copolymerisation einer Monomerenmischung, bestehend aus mindestens einem Acrylat und mindestens einem Methacrylat in einem Polymerisationsschritt hergestellt wird.

2. Verfahren gemäss Anspruch 1, **dadurch gekennzeichnet, dass** die Copolymere der Copolymer-Mischung mindestens 70 Gew.-% an Wiederholungseinheiten aufweisen, die von Alkyl(meth)acrylaten mit 12 bis 40 Kohlenstoffatomen im Alkylrest abgeleitet sind.

3. Verfahren gemäss Anspruch 1 oder 2, **dadurch gekennzeichnet, dass** die Copolymer-Mischung mindestens fünf Copolymere umfasst, die sich in der Zusammensetzung der Wiederholungseinheiten unterscheiden.

4. Verfahren gemäss mindestens einem der vorhergehenden Ansprüche, **dadurch gekennzeichnet, dass** mindestens drei der Copolymere mindestens zwei unterschiedliche Wiederholungseinheiten umfassen, die von Alkyl(meth)acrylaten mit 12 bis 40 Kohlenstoffatomen im Alkylrest abgeleitet sind, wobei mindestens ein erstes Copolymer einen höheren Anteil an Wiederholungseinheiten aufweist, die von Alkyl(meth)acrylaten mit 19 bis 22 Kohlenstoffatomen im Alkylrest abgeleitet sind, als mindestens zwei der weiteren Copolymere; mindestens ein zweites Copolymer einen höheren Anteil an Wiederholungseinheiten aufweist, die von Alkyl(meth)acrylaten mit 12 bis 18 Kohlenstoffatomen im Alkylrest abgeleitet sind, als mindestens zwei der weiteren Copolymere; und mindestens ein drittes Copolymer Wiederholungseinheiten aufweist, die von Alkyl(meth)acrylaten mit 19 bis 22 Kohlenstoffatomen im Alkylrest abgeleitet sind, und Wiederholungseinheiten aufweist, die von Alkyl(meth)acrylaten mit 12 bis 18 Kohlenstoffatomen im Alkylrest abgeleitet sind, wobei der Anteil des dritten Copolymers an Wiederholungseinheiten, die von Alkyl(meth)acrylaten mit 19 bis 22 Kohlenstoffatomen im Alkylrest abgeleitet sind, geringer ist als der Anteil an diesen Wiederholungseinheiten im ersten Copolymer und der Anteil des dritten Copolymers an Wiederholungseinheiten, die von Alkyl(meth)acrylaten mit 12 bis 18 Kohlenstoffatomen im Alkylrest abgeleitet sind, geringer ist als der Anteil an diesen Wiederholungseinheiten im zweiten Copolymer.

5. Verfahren gemäss mindestens einem der vorhergehenden Ansprüche, **dadurch gekennzeichnet, dass** der Anteil eines Copolymers in der Copolymer-Mischung höchstens 50 Gew.-% beträgt.

6. Verfahren gemäss mindestens einem der vorhergehenden Ansprüche, **dadurch gekennzeichnet, dass** ein Copolymer mit Wiederholungseinheiten, die von Alkylmethacrylaten mit 16 bis 18 Kohlenstoffatomen abgeleitet sind, und Wiederholungseinheiten, die von Alkylacrylaten mit 18 bis 22 Kohlenstoffatomen abgeleitet sind, mindestens 30 Gew.-% an Wiederholungseinheiten aufweist, die von Alkylacrylaten mit 19 bis 22 Kohlenstoffatomen abgeleitet sind.

7. Verfahren gemäss mindestens einem der vorhergehenden Ansprüche, **dadurch gekennzeichnet, dass** die Copolymer-Mischung mindestens vier Copolymere umfasst, die Wiederholungseinheiten, die von Alkylacrylaten mit 16 bis 18 Kohlenstoffatomen abgeleitet sind, und Wiederholungseinheiten, die von Alkylmethacrylaten mit 19 bis 22 Kohlenstoffatomen abgeleitet sind, enthalten.

8. Verfahren gemäss mindestens einem der vorhergehenden Ansprüche, **dadurch gekennzeichnet, dass** die Copolymer-Mischung ein Gewichtsmittel des Molekulargewichts im Bereich von 200 000 bis 500 000 g/mol aufweist.

9. Verfahren gemäss mindestens einem der vorhergehenden Ansprüche, **dadurch gekennzeichnet, dass** das Verfahren in Gegenwart eines Lösungsmittels durchgeführt wird.

10. Entparaffinierungs-Hilfsmittel (Dewaxing Aid) zur Reduzierung des Paraffinanteils von Mineralölzusammensetzungen umfassend Copolymere mit Wiederholungseinheiten, die von Alkyl(meth)acrylaten abgeleitet sind, **dadurch gekennzeichnet, dass** das Entparaffinierungs-Hilfsmittel eine Copolymer-Mischung mit mindestens vier Copolymeren umfasst, wobei sich die Copolymere in der Zusammensetzung der Wiederholungseinheiten unterscheiden, wobei die Copolymere Wiederholungseinheiten, die von Alkylmethacrylaten mit 16 bis 18 Kohlenstoffatomen abgeleitet sind, und Wiederholungseinheiten, die von Alkylacrylaten mit 19 bis 22 Kohlenstoffatomen abgeleitet sind, enthalten, und wobei die Copolymer-Mischung durch Copolymerisation einer Monomerenmischung, bestehend aus mindestens einem Acrylat und mindestens einem Methacrylat in einem Polymerisationsschritt hergestellt wird.

## Claims

1. Process for reducing the paraffin content of mineral oil compositions, by providing a mineral oil composition with a dewaxing aid, cooling to form a paraffin precipitate and at least partly removing the paraffin precipitate formed, **characterized in that** the dewaxing aid used is a copolymer mixture comprising at least four copolymers, the copolymers differing in the composition of the repeat units, the copolymers containing repeat units derived from alkyl methacrylates having 16 to 18 carbon atoms, and repeat units derived from alkyl acrylates having 19 to 22 carbon atoms, and the copolymer mixture being prepared by copolymerization of a monomer mixture consisting of at least one acrylate and at least one methacrylate in one polymerization step.

2. Process according to Claim 1, **characterized in that** the copolymers of the copolymer mixture have at least 70% by weight of repeat units derived from alkyl (meth)acrylates having 12 to 40 carbon atoms in the alkyl radical.

3. Process according to Claim 1 or 2, **characterized in that** the copolymer mixture comprises at least five copolymers which differ in the composition of the repeat units.

4. Process according to at least one of the preceding claims, **characterized in that** at least three of the copolymers comprise at least two different repeat units derived from alkyl (meth)acrylates having 12 to 40 carbon atoms in the alkyl radical, wherein at least one first copolymer has a higher proportion of repeat units derived from alkyl (meth)acrylates having 19 to 22 carbon atoms in the alkyl radical than at least two of the other copolymers; at least one second copolymer has a higher proportion of repeat units derived from alkyl (meth)acrylates having 12 to 18 carbon atoms in the alkyl radical than at least two of the other copolymers; and at least one third copolymer has repeat units derived from alkyl (meth)acrylates having 19 to 22 carbon atoms in the alkyl radical and having repeat units derived from alkyl (meth)acrylates having 12 to 18 carbon atoms in the alkyl radical, the proportion in the third copolymer of repeat units derived from alkyl (meth)acrylates having 19 to 22 carbon atoms in the alkyl radical being lower than the proportion of these repeat units in the first copolymer, and the proportion in the third copolymer of repeat units derived from alkyl (meth)acrylates having 12 to 18 carbon atoms in the alkyl radical being lower than the proportion of these repeat units in the second copolymer.

5. Process according to at least one of the preceding claims, **characterized in that** the proportion of any copolymer in the copolymer mixture is not more than 50% by weight.

6. Process according to at least one of the preceding claims, **characterized in that** a copolymer having repeat units derived from alkyl methacrylates having 16 to 18 carbon atoms and repeat units derived from alkyl acrylates having 18 to 22 carbon atoms has at least 30% by weight of repeat units derived from alkyl acrylates having 19 to 22 carbon atoms.

7. Process according to at least one of the preceding claims, **characterized in that** the copolymer mixture comprises at least four copolymers containing repeat units derived from alkyl acrylates having 16 to 18 carbon atoms and repeat units derived from alkyl methacrylates having 19 to 22 carbon atoms.

8. Process according to at least one of the preceding claims, **characterized in that** the copolymer mixture has a weight-average molecular weight in the range from 200 000 to 500 000 g/mol.

9. Process according to at least one of the preceding claims, **characterized in that** the process is performed in the presence of a solvent.

10. Dewaxing aid for reduction of the paraffin content of mineral oil compositions comprising copolymers having repeat units derived from alkyl (meth)acrylates, **characterized in that** the dewaxing aid comprises a copolymer mixture having at least four copolymers, the copolymers differing in the composition of the repeat units, the copolymers containing repeat units derived from alkyl methacrylates having 16 to 18 carbon atoms, and repeat units derived from alkyl acrylates having 19 to 22 carbon atoms, and the copolymer mixture being prepared by copolymerization of a monomer mixture consisting of at least one acrylate and at least one methacrylate in one polymerization step.

## Revendications

1. Procédé pour la réduction de la proportion de paraffine de compositions d'huile minérale, une composition d'huile minérale étant pourvue d'un adjuvant de déparaffinage (Dewaxing Aid), refroidie avec formation d'un précipité de paraffine et le précipité de paraffine étant au moins partiellement séparé, **caractérisé en ce qu'**on utilise, comme adjuvant de déparaffinage, un mélange de copolymères comprenant au moins quatre copolymères, les copolymères se distinguant en ce qui concerne la composition des unités récurrentes, les copolymères contenant des unités récurrentes qui sont dérivées de méthacrylates d'alkyle comprenant 16 à 18 atomes de carbone et des unités récurrentes qui sont dérivées d'acrylates d'alkyle comprenant 19 à 22 atomes de carbone et le mélange de copolymères étant préparé par copolymérisation d'un mélange de monomères constitué par au moins un acrylate et au moins un méthacrylate dans une seule étape de polymérisation.

2. Procédé selon la revendication 1, **caractérisé en ce que** les copolymères du mélange de copolymères présentent au moins 70% en poids d'unités récurrentes qui sont dérivées de (méth)acrylates d'alkyle comprenant 12 à 40 atomes de carbone dans le radical alkyle.

3. Procédé selon la revendication 1 ou 2, **caractérisé en ce que** le mélange de copolymères comprend au moins cinq copolymères qui se distinguent en ce qui concerne la composition des unités récurrentes.

4. Procédé selon au moins l'une quelconque des revendications précédentes, **caractérisé en ce qu'**au moins trois des copolymères comprennent au moins deux unités récurrentes différentes, qui sont dérivées de (méth)acrylates d'alkyle comprenant 12 à 40 atomes de carbone dans le radical alkyle,
au moins un premier copolymère présentant une proportion plus élevée d'unités récurrentes qui sont dérivées de (méth)acrylates d'alkyle comprenant 19 à 22 atomes de carbone dans le radical alkyle qu'au moins deux des autres copolymères ;
au moins un deuxième copolymère présentant une proportion plus élevée d'unités récurrentes qui sont dérivées de (méth)acrylates d'alkyle comprenant 12 à 18 atomes de carbone dans le radical alkyle qu'au moins deux des autres copolymères ;
et au moins un troisième copolymère présentant des unités récurrentes qui sont dérivées de (méth)acrylates d'alkyle présentant 19 à 22 atomes de carbone dans le radical alkyle et des unités récurrentes qui sont dérivées de (méth)acrylates d'alkyle présentant 12 à 18 atomes de carbone dans le radical alkyle,
la proportion dans le troisième copolymère d'unités récurrentes qui sont dérivées de (méth)acrylates d'alkyle comprenant 19 à 22 atomes de carbone dans le radical alkyle étant inférieure à la proportion de ces unités récurrentes dans le premier copolymère et la proportion dans le troisième copolymère d'unités récurrentes qui sont dérivées de (méth)acrylates d'alkyle comprenant 12 à 18 atomes de carbone dans le radical alkyle étant inférieure à la proportion de ces unités récurrentes dans le deuxième copolymère.

5. Procédé selon au moins l'une quelconque des revendications précédentes, **caractérisé en ce que** la proportion d'un copolymère dans le mélange de copolymères est d'au plus 50% en poids.

6. Procédé selon au moins l'une quelconque des revendications précédentes, **caractérisé en ce qu'**un copolymère présentant des unités récurrentes qui sont dérivées de méthacrylates d'alkyle comprenant 16 à 18 atomes de carbone et des unités récurrentes qui sont dérivées d'acrylates d'alkyle comprenant 18 à 22 atomes de carbone, présente au moins 30% en poids d'unités récurrentes qui sont dérivées d'acrylates d'alkyle comprenant 19 à 22 atomes de carbone.

7. Procédé selon au moins l'une quelconque des revendications précédentes, **caractérisé en ce que** le mélange de copolymères comprend au moins quatre copolymères qui contiennent des unités récurrentes qui sont dérivées d'acrylates d'alkyle comprenant 16 à 18 atomes de carbone et des unités récurrentes qui sont dérivées de méthacrylates d'alkyle comprenant 19 à 22 atomes de carbone.

8. Procédé selon au moins l'une quelconque des revendications précédentes, **caractérisé en ce que** le mélange de copolymères présente une moyenne pondérale du poids moléculaire dans la plage de 200.000 à 500.000 g/mole.

9. Procédé selon au moins l'une quelconque des revendications précédentes, **caractérisé en ce que** le procédé est réalisé en présence d'un solvant.

10. Adjuvant de déparaffinage (Dewaxing Aid) pour la réduction de la proportion de paraffine de compositions d'huile minérale comprenant des copolymères présentant des unités récurrentes, qui sont dérivées de (méth)acrylates d'alkyle, **caractérisé en ce que** l'adjuvant de déparaffinage comprend un mélange copolymères présentant au moins quatre copolymères, les copolymères se distinguant en ce qui concerne la composition des unités récurrentes, les copolymères contenant des unités récurrentes qui sont dérivées de méthacrylates d'alkyle comprenant 16 à 18 atomes de carbone et des unités récurrentes qui sont dérivées d'acrylates d'alkyle comprenant 19 à 22 atomes de carbone et le mélange de copolymères étant préparé par copolymérisation d'un mélange de monomères constitué par au moins un acrylate et au moins un méthacrylate en une seule étape de polymérisation.
